# EUROPEAN PATENT APPLICATION

(11) **EP 4 354 992 A1**
(43) Date of publication of application: **17.04.2024**
(21) Application number: 22820004.4
(22) Date of filing: 16.05.2022
(51) Int. Cl.: H04W 72/04, H04W 84/12

(54) **COMMUNICATION DEVICE, COMMUNICATION METHOD, AND PROGRAM**

(30) Priority: 07.06.2021 JP 2021094997
(71) Applicant: CANON KABUSHIKI KAISHA, Ohta-ku Tokyo 146-8501 (JP)
(72) Inventor: MINAKAWA, Atsushi, Tokyo 146-8501 (JP)
(74) Representative: Canon Europe Limited
(86) International application number: PCT/JP2022/020312
(87) International publication number: WO 2022/259821

(57) **Abstract**

In a state where a communication device has established a connection with another communication device via a first frequency channel and a second frequency channel, a second frame storing information indicating whether a first frame to be transmitted to the other communication device via the first frequency channel and the second frequency channel is to be transmitted redundantly via the first frequency channel and the second frequency channel is received, and when the first frame is received via the first frequency channel, the first frame is not received via the second frequency channel based on the information.

## Description

### Technical Field

The present invention relates to a communication device that performs wireless communication.

### Background Art

The Institute of Electrical and Electronics Engineers (IEEE) 802.11 series is known as WLAN communication standards established by the IEEE. WLAN stands for Wireless Local Area Network. The IEEE 802.11 series standards include standards such as IEEE 802.11 a/b/g/n/ac/ax standards. Japanese Patent Application Laid-Open No. 2018-50133 discloses that wireless communication by orthogonal frequency-division multiple access (OFDMA) is executed in the IEEE 802.11ax standard.

### Citation List

### Patent Literature

PTL 1: Japanese Patent Application Laid-Open No. 2018-50133

To further improve throughput and frequency use efficiency, the IEEE has been considering establishment of the IEEE 802.11be standard (hereinafter, "11be") as a new standard of the IEEE 802.11 series.

An access point (AP) of IEEE 802.11 has heretofore performed communication by establishing a connection with an STA via a single frequency channel. In 11be, adoption of multi-link communication in which one AP performs communication by establishing a connection with a station (STA) via a plurality of frequency channels has been considered.

In a case where one AP and one STA establish a first link and a second link to execute the multi-link communication, if the AP transmits a frame via multicast communication or broadcast communication, the same frame is transmitted redundantly to the same STA. However, the STA that receives the frame via a first frequency channel is unable to determine whether the frame is transmitted also via a second frequency channel by the AP, and can receive the same frame redundantly.

### Summary of Invention

### Technical Problem

In view of the above-described issue, the present invention is directed to preventing a frame to be transmitted to all frequency channels from being received redundantly in a case where a communication device and another communication device establish connection via a plurality of frequency channels.

### Solution to Problem

According to an aspect of the present invention, a communication device includes establishment means configured to establish a connection with another communication device via a first frequency channel and a second frequency channel, reception means configured to receive a second frame storing information indicating whether a first frame to be transmitted from the other communication device via the first frequency channel and the second frequency channel is to be transmitted redundantly via the first frequency channel and the second frequency channel, in a state where the establishment means has established the connection with the other communication device via the first frequency channel and the second frequency channel, and control means configured to control reception of the first frame based on the information in the second frame received by the reception means, wherein, when the first frame is received via the first frequency channel, the control means does not receive the first frame via the second frequency channel, based on the information in the second frame received by the reception means.

According to another aspect of the present invention, a communication device includes establishment means configured to establish a connection with another communication device via a first frequency channel and a second frequency channel, storage means configured to store information indicating whether a first frame to be transmitted to the other communication device via the first frequency channel and the second frequency channel is to be transmitted redundantly via the first frequency channel and the second frequency channel, in a state where the establishment means has established the connection with the other communication device via the first frequency channel and the second frequency channel, and transmission means configured to transmit the second frame in which the information is stored by the storage means.

### Advantageous Effects of Invention

According to the present invention, it is possible to prevent a frame to be transmitted to all frequency channels from being received redundantly in a case where a communication device and another communication device establish a connection via a plurality of frequency channels.

### Brief Description of Drawings

[Fig. 1] Fig. 1 is a diagram illustrating a configuration of a network constructed by a communication device 102.
[Fig. 2] Fig. 2 is a diagram illustrating a hardware configuration of communication devices 102 and 103.
[Fig. 3] Fig. 3 is a diagram illustrating a functional configuration of the communication devices 102 and 103.
[Fig. 4] Fig. 4 is a diagram illustrating an example of a TIM element frame according to an exemplary embodiment of the present invention.
[Fig. 5] Fig. 5 is a sequence diagram illustrating processing in which the communication device 103 receives DTIM beacon frames via a plurality of links, respectively, at the same timing.
[Fig. 6] Fig. 6 is a sequence diagram illustrating processing in which the communication device 103 receives DTIM beacon frames via the plurality of links, respectively, at different timings.
[Fig. 7] Fig. 7 is a flowchart illustrating processing to be executed when the communication device 102 transmits a beacon frame.
[Fig. 8] Fig. 8 is a flowchart illustrating processing to be executed when the communication device 102 according to the exemplary embodiment transmits a DTIM beacon frame.
[Fig. 9] Fig. 9 is a flowchart illustrating processing to be executed when the communication device 103 according to the exemplary embodiment receives the DTIM beacon frame.
[Fig. 10] Fig. 10 is a diagram illustrating a configuration of a network constructed by a communication device 102 according to a second exemplary embodiment.
[Fig. 11] Fig. 11 is a flowchart illustrating processing to be executed when the communication device 102 according to the present exemplary embodiment transmits a beacon frame.
[Fig. 12] Fig. 12 is a flowchart illustrating processing to be executed when a communication device 103 according to the present exemplary embodiment receives a DTIM beacon frame.

### Description of Embodiments

Exemplary embodiments of the present invention will be described in detail below with reference to the accompanying drawings. Configurations to be described in the following exemplary embodiments are merely examples, and the present invention is not limited to the illustrated configurations.

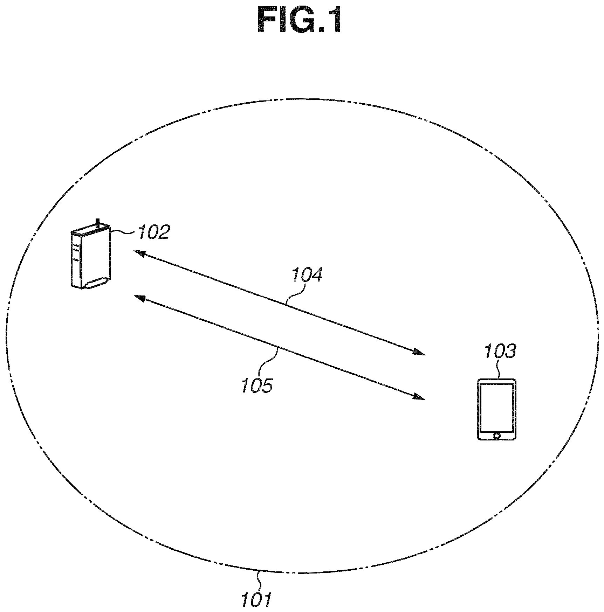

Fig. 1 illustrates a configuration example of a network according to an exemplary embodiment of the present invention. Fig. 1 illustrates a configuration in which one AP (communication device 102) and one STA (communication device 103) are included as communication devices.

The access point (AP) 102 is a communication device having a function of constructing a network 101. The network 101 is a wireless network.

The station (STA) 103 is a communication device having a function of participating in the network 101. Each communication device conforms to the IEEE 802.11be (EHT) standard and is configured to execute wireless communication compliant with the IEEE 802.11be standard via the network 101. IEEE stands for Institute of Electrical and Electronics Engineers. EHT stands for Extremely High Throughput. EHT may be interpreted as an abbreviation of Extreme High Throughput. Each communication device is configured to perform communication in frequency bands of 2.4 GHz band, 5 GHz band, and 6 GHz band. The frequency bands used by each communication device are not limited to these frequency bands. Any other frequency band, such as 60 GHz band, may also be used. Each communication device can establish communication using frequency bands of 20 MHz, 40 MHz, 80 MHz, 160 MHz, and 320 MHz.

The communication device 102 and the communication device 103 execute multi-link communication in which links are established via a plurality of frequency channels to execute the communication. An AP that executes the multi-link communication is also referred to as an AP Multi-Link Device (AP MLD). The term "frequency channel" used herein refers to a frequency channel defined in the IEEE 802.11 series standards and in which wireless communication compliant with the IEEE 802.11 series standards can be executed. The IEEE 802.11 series standards define a plurality of frequency channels in the frequency bands of 2.4 GHz, 5 GHz, and 6 GHz.

The IEEE 802.11 series standards define the bandwidth of each frequency channel as 20 MHz. In one frequency channel, a bandwidth of 40 MHz or more may be used by bonding adjacent frequency channels. For example, the communication device 102 establishes a first link 104 with the communication device 103 via a first frequency channel in 2.4 GHz band and also establishes a second link 105 with the communication device 103 via a second frequency channel in 5 GHz band, thereby can perform communication via both of the links. In this case, the communication device 102 maintains the second link 105 via the second frequency channel in parallel with the first link 104 via the first frequency channel.

Thus, the communication device 102 establishes the links with the communication device 103 via the plurality of frequency channels, thereby improving throughput in communication with the communication device 103.

The communication device 102 and the communication device 103 may establish a plurality of links in different frequency bands in the multi-link communication. For example, the communication device 102 and the communication device 103 may establish a third link in 6 GHz band in addition to the first link 104 in 2.4 GHz band and the second link 105 in 5 GHz band. Alternatively, the links may be established via a plurality of different channels included in the same frequency band. For example, the first link 104 via channel 1 in 2.4 GHz band and the second link 105 via channel 5 in 2.4 GHz band may be established. Links in the same frequency band and links in different frequency bands may coexist. For example, the communication device 102 and the communication device 103 may establish the third link via channel 36 in 5 GHz band in addition to the first link 104 via channel 1 in 2.4 GHz band and the second link 105 via channel 5 in 2.4 GHz band. By establishing a plurality of connections in different frequency bands with the communication device 103, the communication device 102 can communicate with the communication device 103 in another band even when a certain frequency band is congested and can prevent a decrease in throughput in communication with the communication device 103.

In the multi-link communication, the plurality of links established by the communication device 102 and the communication device 103 may be at least in different frequency channels. In the multi-link communication, a channel space between the frequency channels of the plurality of links established by the communication device 102 and the communication device 103 may be larger than at least 20 MHz. In the present exemplary embodiment, the communication device 102 and the communication device 103 establish the first link 104 and the second link 105, but instead may establish three or more links.

In the case of executing the multi-link communication, the communication device 102 builds a plurality of wireless networks respectively corresponding to the links. In this case, the communication device 102 internally includes a plurality of APs and causes the APs to operate to build the corresponding wireless networks. The APs internally included in the communication device 102 may be one or more physical APs, or may be a plurality of virtual APs configured on one physical AP. If the plurality of links is established in frequency channels belonging to a common frequency band, a common wireless network may be used for the plurality of links.

While the communication device 102 and the communication device 103 conform to the IEEE 802.11be standard, the communication device 102 and the communication device 103 may also conform to at least any one of legacy standards that are standards prior to the IEEE 802.11be standard. The legacy standards refer to the IEEE 802.11a/b/g/n/ac/ax standards. In the present exemplary embodiment, at least any one of the IEEE 802.11a/b/g/n/ac/ax/be standards is referred to as the IEEE 802.11 series standards. The communication device 102 and the communication device 103 may conform not only to the IEEE 802.11 series standards, but also to other communication standards, such as Bluetooth^{®}, NFC, UWB, Zigbee, and MBOA. UWB stands for ultra-wideband, and MBOA stands for Multiband OFDM Alliance. OFDM stands for orthogonal frequency-division multiplexing. NFC stands for near-field communication. The UWB includes wireless USB, wireless 1394, and Winet. The communication device 102 and the communication device 103 may also conform to communication standards for wired communication, such as wired LAN.

Specific examples of the communication device 102 include a wireless LAN router and a PC. However, the communication device 102 is not limited thereto. The communication device 102 may be any communication device capable of executing the multi-link communication with another communication device. Alternatively, the communication device 102 may be an information processing device, such as a wireless chip, capable of executing the wireless communication compliant with the IEEE 802.11be standard. Specific examples of the communication device 103 include a camera, a tablet, a smartphone, a PC, a mobile phone, and a video camera. However, the communication device 103 is not limited thereto. The communication device 103 may be any communication device capable of executing the multi-link communication with another communication device. Alternatively, the communication device 103 may be an information processing device, such as a wireless chip, capable of executing the wireless communication compliant with the IEEE 802.11be standard. The network illustrated in Fig. 1 is composed of one AP and one STA. However, the number of APs and the number of STAs are not limited thereto. For example, two or more STAs may participate in the network built by one AP, and the devices may execute the multi-link communication. The information processing device, such as a wireless chip, may include an antenna for transmitting generated signals.

In the present exemplary embodiment, the communication device 102 operates as an AP and the communication device 103 operates as an STA. However, the present exemplary embodiment is not limited thereto. Both the communication device 102 and the communication device 103 may operate as STAs. In this case, the communication device 102 operates as an STA and also operates as a device having a function of building a wireless network to establish a link with the communication device 103.

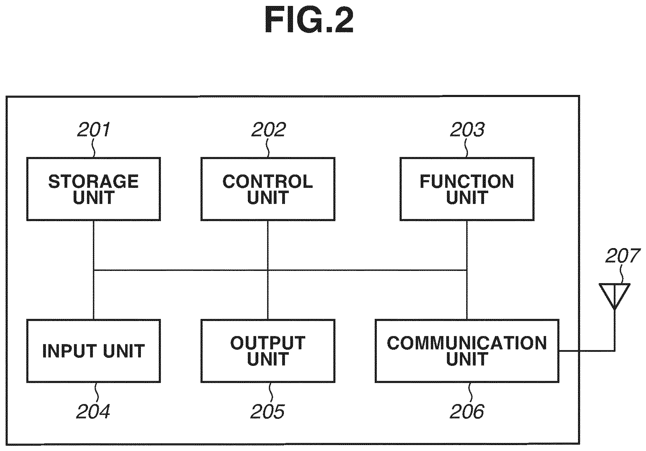

Fig. 2 illustrates a hardware configuration example of the communication device 102. The communication device 102 includes a storage unit 201, a control unit 202, a function unit 203, an input unit 204, an output unit 205, a communication unit 206, and an antenna 207.

The storage unit 201 is composed of one or more memories, such as a ROM and a RAM, and stores computer programs for performing various operations to be described below, and various kinds of information, such as a communication parameter for wireless communication. ROM stands for read-only memory, and RAM stands for random access memory. As the storage unit 201, not only the memories, such as a ROM and a RAM, but also a storage medium, such as a flexible disk, a hard disk, an optical disk, a magneto-optical disk, a CD-ROM, a CD-R, a magnetic tape, a nonvolatile memory card, and a DVD may be used. The storage unit 201 may include a plurality of memories.

The control unit 202 is composed of, for example, one or more processors, such as a CPU and an MPU, and executes a computer program stored in the storage unit 201, thereby controlling the entire communication device 102. The control unit 202 may control the entire communication device 102 by causing the computer programs stored in the storage unit 201 and an operating system (OS) to operate in cooperation. Further, the control unit 202 generates data and signals (wireless frames) to be transmitted in communication with another communication device. CPU stands for central processing unit, and MPU stands for micro processing unit. The control unit 202 may include a plurality of a processors, such as a multi-core, and the plurality of processors may control the entire communication device 102.

Further, the control unit 202 controls the function unit 203 to execute wireless communication and predetermined processing, such as image capturing, printing, and projection. The function unit 203 is hardware for the communication device 102 to execute predetermined processing.

The input unit 204 receives various operations from a user. The output unit 205 performs various kinds of output processing for the user via a monitor screen or a speaker. In this case, the output processing performed by the output unit 205 may include display on a monitor screen, audio output via a speaker, and vibration output. The input unit 204 and the output unit 205 may be implemented using one module, such as a touch panel. The input unit 204 and the output unit 205 may each be integrally formed with the communication device 102, or may be separately formed from the communication device 102.

The communication unit 206 controls the wireless communication compliant with the IEEE 802.11be standard. The communication unit 206 may control not only the wireless communication compliant with the IEEE 802.11be standard, but also wireless communication compliant with other IEEE 802.11 series standards, and wired communication, such as wired LAN. The communication unit 206 controls the antenna 207 to transmit and receive signals for wireless communication generated by the control unit 202. The communication device 102 may include a plurality of communication units 206. The communication device 102 including the plurality of communication units 206 establishes at least one link for each communication unit 206 when establishing the plurality of links in the multi-link communication.

Alternatively, the communication device 102 may establish the plurality of links using one communication unit 206. In this case, the communication unit 206 executes communication via the plurality of links by switching frequency channels operating in time division. If the communication device 102 conforms not only to the IEEE 802.11be standard, but also to the NFC standard, Bluetooth standard, or the like, the communication device 102 may control wireless communication compliant with these communication standards. If the communication device 102 can execute wireless communication compliant with a plurality of communication standards, the communication device 102 may include communication units and antennas that conform to the respective communication standards. The communication device 102 communicates data, such as image data, document data, or video data, with the communication device 103 via the communication unit 206. The antenna 207 may be formed separately from the communication unit 206, or the antenna 207 and the communication unit 206 may be integrally formed into one module.

The antenna 207 is an antenna that enables communication in 2.4 GHz band, 5 GHz band, and 6 GHz band. In the present exemplary embodiment, the communication device 102 includes one antenna, but instead may include different antennas for the respective frequency bands. In a case where the communication device 102 includes a plurality of antennas, the communication device 102 may include the communication units 206 respectively corresponding to the plurality of antennas.

The communication device 103 has a hardware configuration similar to that of the communication device 102.

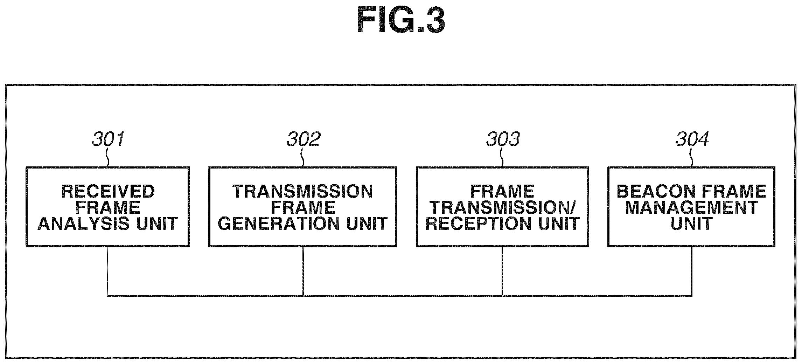

Fig. 3 illustrates a functional configuration example of the communication device 102. The communication device 102 includes a received frame analysis unit 301, a transmission frame generation unit 302, and a frame transmission/reception unit 303. The communication device 102 further includes a beacon frame management unit 304.

The received frame analysis unit 301 is a functional block that analyzes each frame received from the counterpart communication device.

The transmission frame generation unit 302 is a functional block that generates each frame to be transmitted to the counterpart communication device.

The frame transmission/reception unit 303 is a functional block that transmits and receives frames to and from the counterpart communication device. This functional block controls the transmission and reception of a beacon frame, a group addressed frame, a data frame, and the like.

The beacon frame management unit 304 is a functional block that issues instructions to generate and analyze beacon frames. The functional block instructs the transmission frame generation unit 302 to include information for determining redundant transmission of a group addressed frame in a beacon frame. Further, the functional block instructs the received frame analysis unit 301 to analyze the information for determining redundant transmission of the group addressed frame included in the beacon frame.

The communication device 103 has a functional configuration similar to that of the communication device 102.

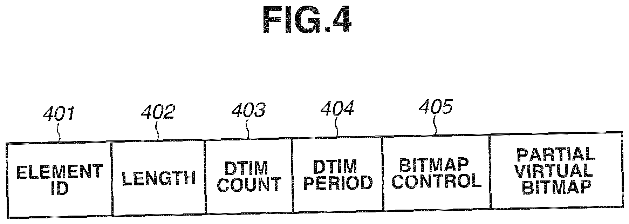

Fig. 4 illustrates a TIM element included in a beacon frame. The element is defined based on the IEEE 802.11 standards.

An element ID field 401 stores "5" indicating that an element in the beacon frame is the TIM element.

A length field 402 indicates the length of the TIM element.

A DTIM count field 403 indicates whether the beacon frame including the element is a delivery traffic indication map (DTIM) beacon frame. When a DTIM count indicated by the field is "0", the value indicates that the beacon frame including the element is a DTIM beacon frame, and there is a possibility that a group addressed frame is transmitted after the DTIM beacon frame. When the DTIM count is a value other than "0", the value indicates that the beacon frame is not a DTIM beacon frame and is not the group addressed frame.

A DTIM period field 404 indicates a DTIM interval. For example, if the DTIM interval is set to "3", the value indicates that every third beacon frame to be transmitted is the DTIM beacon frame. The DTIM count is decremented every time a beacon frame is transmitted. The DTIM count when a DTIM beacon frame is transmitted indicates "0", and an initial value (= maximum value) is set to the DTIM count of the beacon frame to be transmitted next. For example, if the DTIM interval is set to "3", the maximum value of the DTIM count is "2", and thus the initial value of "2" is set.

A bitmap control field 405 indicates whether a group addressed frame is present using a bit in the bitmap control field 405.

A sequence diagram illustrates a case where "1" is set in the bitmap control field 405 and "0" is set to the DTIM count. In the case where "1" is set in the bitmap control field 405 and "0" is set to the DTIM count, a DTIM beacon frame is transmitted and then a group addressed frame is transmitted.

The term "group addressed frame" used herein refers to a frame including an address with a group bit" 1" in a MAC address to be included in a destination address (DA) of a MAC frame. Similarly, a multicast frame that includes a group bit "1" is a group addressed frame.

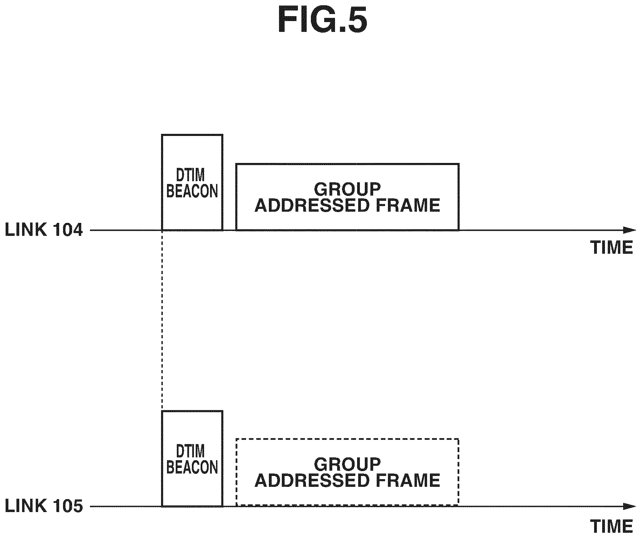

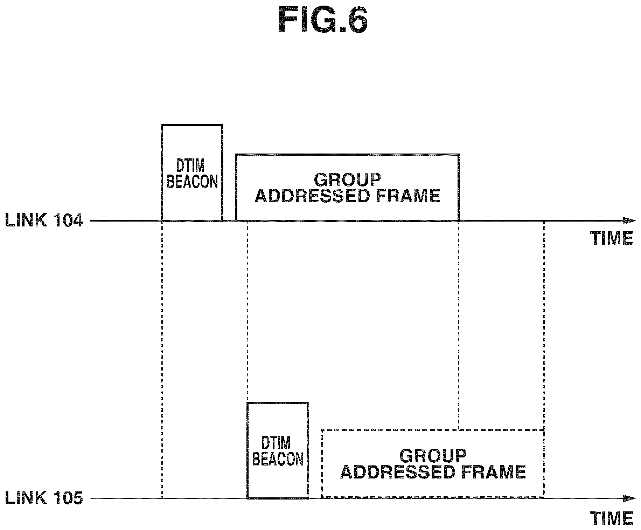

While in Fig. 5, DTIM beacon frames are transmitted via the link 104 and the link 105 at the same timing, the DTIM beacon frames may be transmitted via the link 104 and the link 105 at different timings as illustrated in Fig. 6.

### (First Exemplary Embodiment)

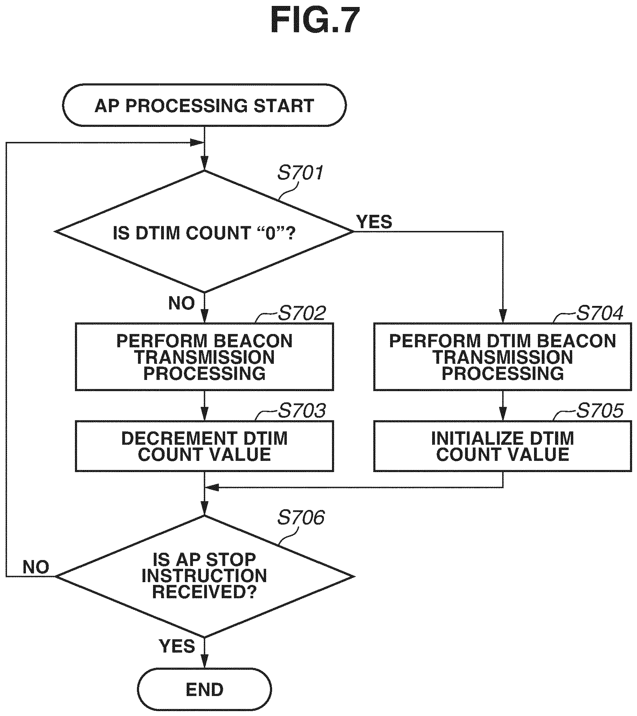

Fig. 7 is a flowchart illustrating a processing procedure performed by the control unit 202 executing a program stored in the storage unit 201 of the communication device 102. The flowchart illustrates an example to be executed when the communication device 102 according to the present exemplary embodiment transmits a beacon frame.

The processing in the flowchart is started upon power-on of the communication device 102. Alternatively, the processing may be started when the user has completed an operation setting or the like about the beacon frame on the communication device 102.

The communication device 102 determines whether the value stored in the DTIM count field 403 of the TIM element included in the beacon frame to be transmitted is "0" (S701). If the value stored in the DTIM count field 403 is not "0" (NO in S701), the beacon frame is transmitted (S702). After execution of the processing of S702, the value stored in the DTIM count field 403 is decremented (S703), and it is determined whether a stop instruction is received (S706). Specifically, the communication device 102 determines whether an instruction to stop the operation as the AP is received from the user. If the stop instruction is received (YES in S706), the communication device 102 stops the operation as the AP, and then terminates the processing in the flowchart. On the other hand, if the stop instruction is not received (NO in S706), the processing of S701 is performed.

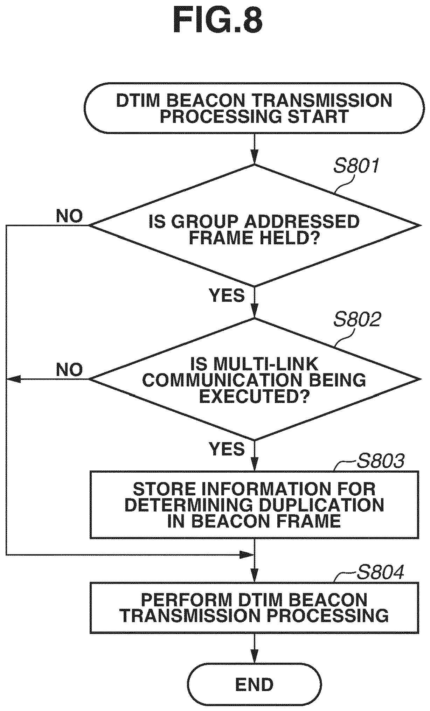

If the value stored in the DTIM count field 403 is "0" (YES in S701), DTIM beacon frame transmission processing is performed (S704). The processing of S704 will be described in detail below with reference to Fig. 8. After the processing of S704 is performed, the value of the DTIM count field 403 is reset to the initial value (S705). For example, if the DTIM interval is set to "3", the maximum value of the DTIM count is "2", and thus the initial value "2" is set. After execution of the processing of S705, it is determined whether the AP stop instruction is received (S706). In S706, if it is determined that the stop instruction is not received (NO in S706), the processing of S701 is performed. On the other hand, if the stop instruction is not received (YES in S706), the communication device 102 stops the operation as the AP, and then terminates the processing in the flowchart.

Fig. 8 is a flowchart illustrating a processing procedure performed by the control unit 202 executing a program stored in the storage unit 201 of the communication device 102. The flowchart illustrates an example to be executed when the communication device 102 according to the present exemplary embodiment transmits a DTIM beacon frame. The processing in the flowchart is started upon issuance of an instruction for the processing of S704.

The communication device 102 determines whether the group addressed frame to be transmitted is held (S801). If it is determined that the frame is not held (NO in S801), the beacon frame is transmitted (S804), and then the processing in the flowchart is terminated.

If it is determined that the claim is held (YES in S801), the communication device 102 sets " 1" in the bitmap control field 405 in the TIM element of the beacon frame to be transmitted, and determines whether the communication device is executing the multi-link communication (S802). Setting "1" in the bitmap control field 405 means that the group addressed frame is transmitted after the DTIM beacon frame is transmitted. In S802, if it is determined that the multi-link communication is not being executed (NO in S802), the DTIM beacon frame is transmitted (S804), and then the processing in the flowchart is terminated.

If it is determined that the multi-link communication is being executed (YES in S802), information for determining duplication is stored in the beacon frame (S803). The information for determining the duplication refers to information indicating that the communication device 102 transmits the same group addressed frame via the link 104 and the link 105. The information for determining the duplication is information indicated by one bit. The information for determining the duplication being " 1" indicates that the group addressed frame is transmitted redundantly and being "0" indicates that the group addressed frame is not transmitted redundantly. The information for determining the duplication can be stored in a reserved element in the beacon frame, however, this is not limiting. The information for determining the duplication may be stored in an element in which "221" indicating vendor-specific information is stored in the element ID of the beacon frame. A new field may be created in the TIM elements illustrated in Fig. 4, and the value of a group addressed frame identifier may be stored in the field.

The communication device 102 transmits the DTIM beacon frame storing the information for determining the duplication (S804), and then terminates the processing in the flowchart.

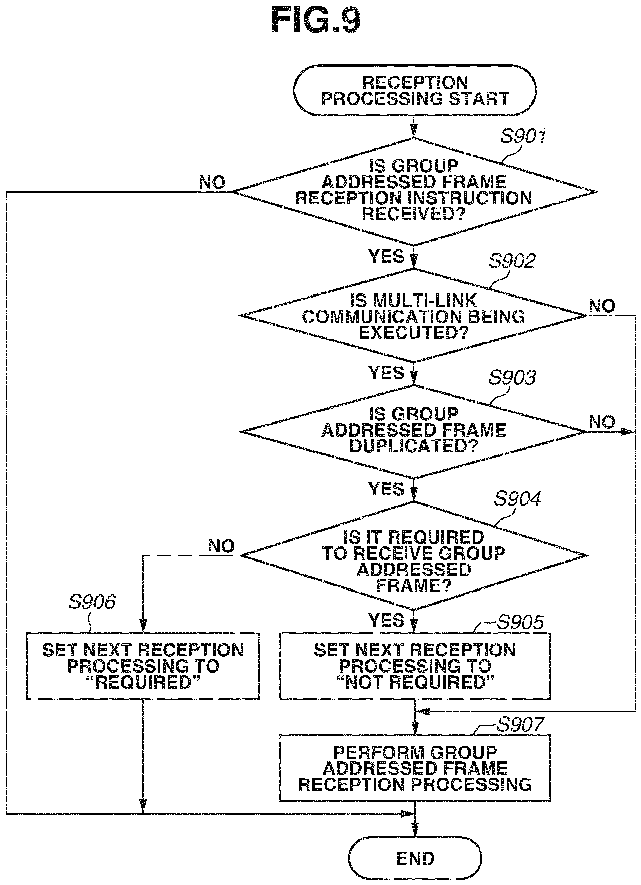

Fig. 9 is a flowchart illustrating a processing procedure performed by the control unit 202 executing a program stored in the storage unit 201 of the communication device 103. The flowchart illustrates an example to be executed when the communication device 103 according to the present exemplary embodiment receives the DTIM beacon frame. The processing in the flowchart is started upon reception of the DTIM beacon frame by the communication device 103.

The communication device 103 determines whether a group addressed frame reception instruction is received (S901). Specifically, it is determined whether the bit in the bitmap control field 405 of the received DTIM beacon frame indicates "1". If it is determined that the reception instruction is not received (NO in S901), the processing in the flowchart is terminated.

If it is determined that the reception instruction is received (YES in S901), the communication device 103 determines whether the communication device is executing the multi-link communication (S902). If it is determined that the multi-link communication is not being executed (NO in S902), the communication device 102 receives the group addressed frame transmitted after the DTIM beacon frame (S904), and then the processing in the flowchart is terminated.

If it is determined that the multi-link communication is being executed (YES in S902), it is determined whether the group addressed frame received via the link 104 and the link 105 is duplicated (S903). Specifically, the information for determining the duplication stored in the beacon frame is checked. In the present exemplary embodiment, if the bit stored in the element ID indicates "1", the value indicates that the group addressed frame is received redundantly. In S903, if it is determined that the group addressed frame is not duplicated (NO in S903), the group addressed frame to be transmitted after the DTIM beacon frame is received (S904), and then the processing in the flowchart is terminated.

On the other hand, in S903, if it is determined that the group addressed frame is duplicated (YES in S903), it is determined whether it is required to receive the group addressed frame (S904). Specifically, the determination is made based on information indicating whether it is required to receive the group addressed frame to be set in the storage unit 201 in processing of S905 to be described below. The information is a bit indicating whether it is required to receive the group addressed frame. The bit" 1" indicates that it is not required to receive the group addressed frame, and the bit "0" indicates that it is required to receive the group addressed frame.

In S904, if it is determined that it is required to receive the group addressed frame (YES in S904), the next group addressed frame reception processing is set to "not required" (S905). Specifically, the bit indicating whether it is required to receive the group addressed frame stored in the storage unit 201 is set to "1". In S905, the communication device 103 in which the next reception processing is set to "not required" receives the group addressed frame (S907), and then the processing in the flowchart is terminated.

On the other hand, if it is determined that it is not required to receive the group addressed frame (YES in S904), the next group addressed frame reception processing is set to "required" (S906). Specifically, the bit indicating whether it is required to receive the group addressed frame stored in the storage unit 201 is set to "0". The bit is set to "0" so that the group addressed frame can be received when the next DTIM beacon frame is received. In S906, the communication device 103 in which the next reception processing is set to "required" does not receive the group addressed frame, and the processing in the flowchart is terminated.

According to the present exemplary embodiment, the communication device 103 is capable of determining that the same group addressed frame is to be transmitted via the link 104 and the link 105. Consequently, it is possible to prevent the same group addressed frame from being received redundantly, which leads to a reduction in a load of the reception processing.

The communication device 103 configured not to perform transmission processing via the link 104 during reception processing via the link 105 in a case where group addressed frames are transmitted at different timings, as illustrated in Fig. 6, has the following advantages. That is, by performing control processing to prevent the same group addressed frame from being received redundantly, the communication device 103 can perform data transmission processing via the link 104 during a period in which the frame is being received via the link 105 illustrated in Fig. 6.

### (Second Exemplary Embodiment)

The first exemplary embodiment illustrates an example where the STA controls the reception based on information for determining duplication included in the DTIM beacon frame in a case where the AP transmits the same group addressed frames via the link 104 and the link 105. In a second exemplary embodiment, processing for determining the duplication in a case where an AP transmits different group addressed frames via the link 104 and the link 105 will be described.

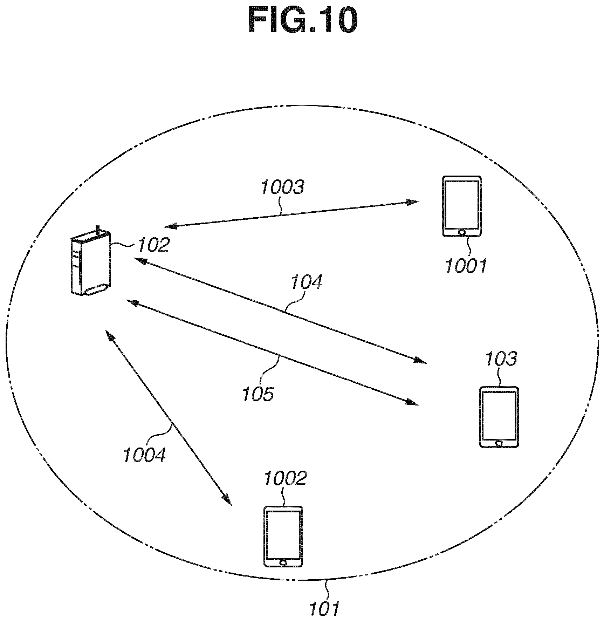

Fig. 10 illustrates a configuration example of a network according to the present exemplary embodiment.

Fig. 10 illustrates an example where the link 104 and a link 1003 operate in the 2.4 GHz band and the link 105 and a link 1004 operate in the 5 GHz band. Thus, the link 104 and the link 105 are in different multicast groups. Accordingly, it is assumed that, for example, while a channel switch announcement is transmitted on the link 105 and the link 1004 using the 5 GHz band, another frame may be transmitted on the link 104 and the link 1003.

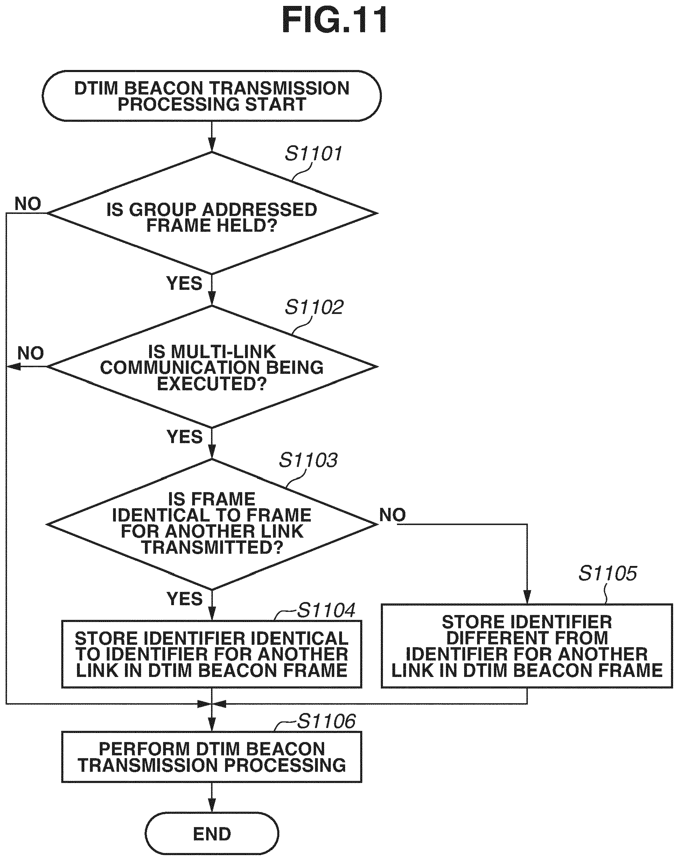

Fig. 11 is a flowchart illustrating a processing procedure performed by the control unit 202 executing a program stored in the storage unit 201 of the communication device 102. The flowchart illustrates an example to be executed when the communication device 102 according to the present exemplary embodiment transmits a DTIM beacon frame. The processing in the flowchart is started upon issuance of an instruction for the processing of S704.

Processes of S1101 and S1102 are respectively similar to the processes of S801 and S802 illustrated in Fig. 8.

If it is determined that the multi-link communication is not being executed (NO in S1102), the beacon frame is transmitted (S1106), and then the processing in the flowchart is terminated.

If it is determined that the multi-link communication is being executed (YES in S1102), it is determined whether the held group addressed frame is identical to the group addressed frame to be transmitted on another link (S1103). Specifically, it is determined whether the group addressed frame to be transmitted on the link 105 is identical to the group addressed frame to be transmitted on the link 104. If parts of the group addressed frames are identical, it may be determined that these frames are identical. The part of the group addressed frame is, for example, a data part except for an IEEE 802.11 header, a physical header, and a frame check sequence (FCS) included in the group addressed frame.

If it is determined that the group addressed frames are not identical (NO in S1103), a group addressed frame identifier different from that for another link is stored in the DTIM beacon frame (S1105). The group addressed frame identifier refers to a value indicating whether the group addressed frame transmitted on the link 104 is identical to the group addressed frame transmitted on the link 105. The initial value of the group addressed frame identifier is "0". However, the initial value is not limited to this value. The value of the group addressed frame identifier is stored in the storage unit 201, and the value is incremented and the incremented value is stored in the DTIM beacon frame. In other words, a value different from the value of the group addressed frame identifier stored in the DTIM beacon frame on another link is stored in the beacon frame. Specifically, a value obtained by adding " 1" to the value of the group addressed frame identifier stored in the received DTIM beacon frame is stored in the DTIM beacon frame. For example, if the value of the identifier stored in the storage unit 201 is "5", the value is incremented to "6", and the incremented value is stored in the DTIM beacon frame. Instead of incrementing the value by "1", an integer other than "1" may be added.

The reserved element of the elements of the beacon frame is provided with a new field for storing the group addressed frame identifier, and the group addressed frame identifier is stored in the field. The communication device 102 transmits the DTIM beacon frame in which the value of the identifier different from that for another link is stored in S1105 (S1106), and then the processing in the flowchart is terminated.

On the other hand, if it is determined that the held group addressed frame is identical to the group addressed frame to be transmitted on another link (YES in S1103), the value of the group addressed frame identifier stored in the storage unit 201 is stored in the DTIM beacon frame (S1104). In other words, the value identical to the value of the received group addressed frame identifier is stored in the DTIM beacon frame. The communication device 102 that has stored the group addressed frame identifier in the beacon frame in S1104 transmits the DTIM beacon frame (S1106), and then the processing in the flowchart is terminated.

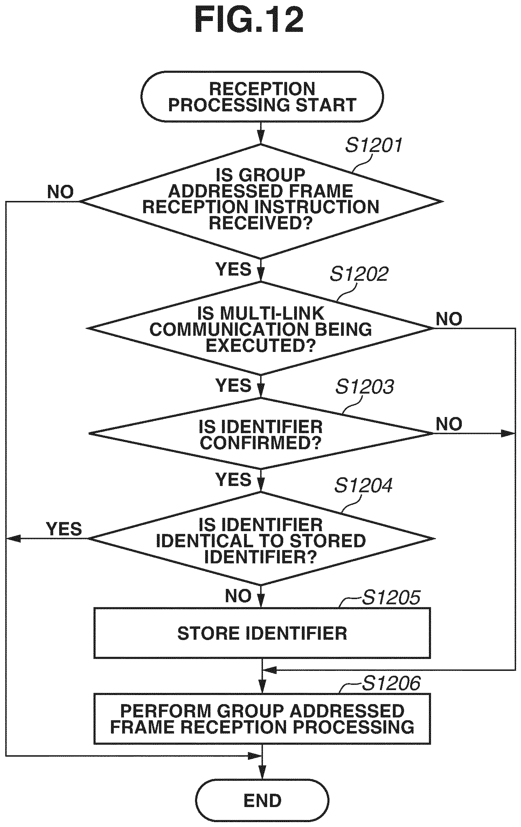

Fig. 12 is a flowchart illustrating a processing procedure to be performed by the control unit 202 executing a program stored in the storage unit 201 of the communication device 103. Fig. 12 illustrates an example of a flowchart to be executed when the communication device 103 according to the present exemplary embodiment receives a DTIM beacon frame. The processing in the flowchart is started upon reception of the DTIM beacon frame by the communication device 103.

Processes of S1201 and S1202 are respectively similar to the processes of S901 and S902 illustrated in Fig. 9.

If it is determined that the multi-link communication is not being executed (NO in S1202), the group addressed frame is received (S1206), and then the processing in the flowchart is terminated.

If it is determined that the multi-link communication is being executed (YES in S1202), it is determined whether the group addressed frame identifier is stored in the received DTIM beacon frame (S1203). Specifically, it is determined whether the group addressed frame identifier is stored in a new element field indicating that the group addressed frame identifier of the DTIM beacon frame is stored. If it is determined that the group addressed frame identifier is not stored (NO in S1203), the group addressed frame is received (S1206), and then the processing in the flowchart is terminated.

If the received DTIM beacon frame does not include the element ID corresponding to the new element field, it may also be determined that the identifier is not stored.

If it is determined that the group addressed frame identifier is stored (YES in S1203), it is determined whether the value of the stored group addressed frame identifier is identical to the value of the identifier stored in the new element field (S1204). Specifically, the value of the group addressed frame identifier stored in the storage unit 201 is compared with the value of the identifier stored in the new element field of the currently received DTIM beacon frame, and it is determined whether the values are identical. If it is determined that the value of the stored group addressed frame identifier is identical to the value of the identifier stored in the new element field (YES in S1204), the processing in the flowchart is terminated. In other words, it is determined that the group addressed frame to be received is duplicated, and thus the reception processing is not carried out.

On the other hand, if it is determined that the value of the stored group addressed frame identifier is not identical to the value of the identifier stored in the new element field (NO in S 1204), the value of the identifier stored in the new element field of the currently received DTIM beacon frame is stored in the storage unit 201 (S1205). In S1205, the communication device 103 that has stored the value of the group addressed frame identifier receives the group addressed frame (S1206), and then the processing in the flowchart is terminated.

According to the present exemplary embodiment, the communication device 103 is capable of determining that the same group addressed frame is to be transmitted via the link 104 and the link 105.

The flowcharts for the communication device 102 and the communication device 103 described in the exemplary embodiments are not limited to the configuration of the network illustrated in Fig. 1. For example, the flowchart may be carried out in a network configuration including an STA 1201 and an STA 1202 that execute single-link communication via the same frequency channel as that of the link 104 or the link 105 as illustrated in Fig. 12. In a case where each communication device is connected to the corresponding link via the same frequency channels as those of the link 104 and the link 105, the processing according to each exemplary embodiment may be executed. For example, the processing according to each exemplary embodiment may be executed not only in the configuration illustrated in Fig. 1, but also in a configuration in which the STA 1201 is connected to a link 1203 that is in the same frequency channel as that of the link 104 and the STA 1202 is connected to a link 1204 that is in the same frequency channel as that of the link 105.

A recording medium on which software program codes for implementing the above-described functions are recorded may be supplied to a system or an apparatus, and the program codes stored in the recording medium may be read and executed by a computer (CPU, MPU) of the system or the apparatus. In this case, the program codes read from the storage medium implement the functions according to the above-described exemplary embodiments, and the storage medium storing the program codes constitutes the above-described apparatus.

As the storage medium for supplying the program codes, a flexible disk, a hard disk, an optical disk, a magneto-optical disk, a CD-ROM, a CD-R, a magnetic tape, a nonvolatile memory card, a ROM, a DVD, and the like can be used.

The above-described functions may be implemented by executing the program codes read by the computer. The above-described functions may also be implemented by an OS running on the computer executing a part or all of the actual processing based on an instruction from the program codes. OS stands for operating system.

Further, the program codes read from the storage medium is written into a memory included in a function extension board inserted into the computer, or a memory included in a function extension unit connected to the computer. The above-described functions may be implemented by a CPU included in the function extension board or the function extension unit performing a part or all of the actual processing based on an instruction from the program code.

The present invention can also be implemented by processing in which a program for implementing one or more functions according to the above-described exemplary embodiments is supplied to a system or an apparatus via a network or a storage medium, and one or more processors in a computer of the system or the apparatus read and execute the program. The present invention can also be implemented by a circuit (e.g., an ASIC) for implementing one or more functions.

The present invention is not limited to the above-described exemplary embodiments, and various alterations and modifications can be made without departing from the spirit and the scope of the present invention. Accordingly, the following claims are appended to disclose the scope of the present invention.

This application claims the benefit of Japanese Patent Application No. 2021-094997, filed June 7, 2021, which is hereby incorporated by reference herein in its entirety.

## Claims

1. A communication device comprising:
establishment means configured to establish a connection with another communication device via a first frequency channel and a second frequency channel;
reception means configured to receive a second frame storing information indicating whether a first frame to be transmitted from the other communication device via the first frequency channel and the second frequency channel is to be transmitted redundantly via the first frequency channel and the second frequency channel, in a state where the establishment means has established the connection with the other communication device via the first frequency channel and the second frequency channel; and
control means configured to control reception of the first frame based on the information in the second frame received by the reception means,
wherein, when the first frame is received via the first frequency channel, the control means does not receive the first frame via the second frequency channel, based on the information in the second frame received by the reception means.

2. A communication device comprising:
establishment means configured to establish a connection with another communication device via a first frequency channel and a second frequency channel;
storage means configured to store information indicating whether a first frame to be transmitted to the other communication device via the first frequency channel and the second frequency channel is to be transmitted redundantly via the first frequency channel and the second frequency channel, in a state where the establishment means has established the connection with the other communication device via the first frequency channel and the second frequency channel; and
transmission means configured to transmit the second frame in which the information is stored by the storage means.

3. The communication device according to Claim 1 or 2, wherein the first frame is a group addressed frame compliant with IEEE 802.11 series standards.

4. The communication device according to Claim 1 or 2, wherein the second frame is a beacon frame.

5. The communication device according to Claim 4, wherein the information is stored in a TIM element or a vendor specific element of the beacon frame.

6. The communication device according to any one of Claims 1 to 5, wherein the communication device performs multi-link communication compliant with IEEE 802.11 series standards.

7. The communication device according to any one of Claims 1 to 6, wherein the communication device is a communication device, in a case where the communication device is receiving data via the first frequency channel, unable to transmit data simultaneously via the second frequency channel.

8. A communication method for a communication device, the method comprising the steps of:
establishing a connection with another communication device via a first frequency channel and a second frequency channel;
receiving a second frame storing information indicating whether a first frame to be transmitted to the other communication device via the first frequency channel and the second frequency channel is to be transmitted redundantly via the first frequency channel and the second frequency channel, in a state where the connection is established with the other communication device via the first frequency channel and the second frequency channel in the establishing step; and
controlling reception of the first frame based on the information in the second frame received in the receiving step,
wherein in the control step, when the first frame is received via the first frequency channel, the first frame is controlled not to be received via the second frequency channel, based on the information in the second frame received in the receiving step.

9. A communication method for a communication device, the method comprising the steps of:
establishing a connection with another communication device via a first frequency channel and a second frequency channel;
storing, in a second frame, information indicating whether a first frame to be transmitted to the other communication device via the first frequency channel and the second frequency channel is to be transmitted redundantly via the first frequency channel and the second frequency channel, in a state where the connection is established with the other communication device via the first frequency channel and the second frequency channel in the establishing step; and
transmitting the second frame in which the information is stored in the storing step.

10. A program for causing a computer to function as each means of the communication device according to any one of Claims 1 to 8.
